# EUROPEAN PATENT SPECIFICATION

(11) **EP 4 266 476 B1**
(45) Date of publication and mention of the grant of the patent: **16.07.2025**
(21) Application number: 23168912.6
(22) Date of filing: 20.04.2023
(51) Int. Cl.: H01M 50/533, H01M 50/536, H01M 50/54, H01M 10/052, H01M 10/0585, H01M 50/103, H01M 50/15, H01M 50/474, H01M 50/489, H01M 50/55

(54) **SECONDARY BATTERY**
SEKUNDÄRBATTERIE
BATTERIE SECONDAIRE

(30) Priority: 20.04.2022 KR 20220048778
(43) Date of publication of application: 25.10.2023
(73) Proprietor: Samsung SDI Co., Ltd., Yongin-si, Gyeonggi-do 17084 (KR)
(72) Inventor: Guen, Min Hyung, 17084 Yongin-si, Gyeonggi-do (KR)
(74) Representative: Gulde & Partner

(56) References cited:
- EP-A1- 2 325 924
- EP-A1- 3 451 416
- EP-A1- 4 142 026
- EP-A1- 4 191 760

## Description

### BACKGROUND

### 1. Field

Aspects of embodiments of the present disclosure relate to a secondary battery.

### 2. Description of the Related Art

Unlike a primary battery that cannot be charged, a secondary battery is a rechargeable and dischargeable battery. A low-capacity secondary battery comprised of one single cell packaged in the form of a pack may be used for various portable small-sized electronic devices, such as cellular phones or camcorders. In addition, a high-capacity secondary battery in which several tens of cells are connected in a battery pack is widely used as a power source for motor drives, such as those in hybrid vehicles or electric vehicles.

A secondary battery may be configured by embedding a stacked or wound electrode assembly with a separator interposed between positive and negative plates and an electrolyte in a case, and installing a cap plate on the case. In such an electrode assembly, an uncoated portion tab may protrude in a lateral or upper direction, and a current collecting structure may be connected to the uncoated portion tab.

However, due to a thickness or size of the current collecting structure, the capacity of the secondary battery is reduced by as much as the space occupied by the current collecting structure.

The above information disclosed in this Background section is provided for enhancement of understanding of the background of the invention.

From EP 2 325 924 A1 there is known a secondary battery as defined in the preamble of claim 1.

### SUMMARY

According to an aspect of embodiments of the present disclosure, a secondary battery capable of improving the welding strength of a current collector plate is provided.

According to one or more embodiments of the present disclosure, a secondary battery includes: an electrode assembly including an electrode uncoated portion protruding toward at least one side, a current collector plate electrically connected to the electrode uncoated portion of the electrode assembly, a case to accommodate the electrode assembly and the current collector plate, and a cap assembly to seal the case, wherein the current collector plate includes an upper coupling portion and a lower coupling portion coupled to the electrode uncoated portion, and a protrusion protruding toward the case between the upper coupling portion and the lower coupling portion.

The current collector plate may include an electrode connection part including the upper coupling portion, the lower coupling portion and the protrusion, welded to the electrode uncoated portion of the electrode assembly and extending along a side of the electrode assembly, and a terminal connection part including an end coupled to the upper end of the electrode connection part, and another end coupled to a terminal protruding through the cap assembly.

The electrode connection part may be plate-shaped and may include a weld portion coupled to the terminal connection part by welding, the upper coupling portion extending downward from a lower end of the weld portion and being welded in contact with the electrode uncoated portion, the protrusion extending downward from a lower end of the upper coupling portion and protruding toward the case, the lower coupling portion extending downward from a lower end of the protrusion, recessed toward the electrode assembly, and welded in contact with the electrode uncoated portion, and a bent portion extending downward from a lower end of the lower coupling portion and protruding toward the case.

The terminal connection part may include an upper portion between the electrode assembly and the cap assembly, and a side portion bent from the upper portion, extending downward, and coupled to the electrode connection part by welding.

The terminal connection part may include a welding groove having a shape corresponding to the weld portion on an outer surface of the side portion, and the weld portion may be coupled to the side portion of the terminal connection part by welding in a state of being inserted in the welding groove.

In the electrode connection part, a weld region may be formed along a width direction of the electrode connection part by welding the weld portion in a state of being in contact with the side portion of the terminal connection part.

The weld region may have an end bent in an upward direction.

The electrode assembly may include electrode plates and separators alternately stacked, and an insulating tape attached and fixed to an outer surface thereof, and the protrusion may be positioned to correspond to the insulating tape.

The secondary battery may further include a terminal protruding upward through the cap assembly and coupled to the current collector plate under the cap assembly.

A width of the upper coupling portion may be greater than that of other regions of the electrode connection part.

The lower coupling portion and the upper coupling portion may be coupled to the electrode uncoated portion by laser welding in a state of being in contact with the electrode uncoated portion and may be formed to be straight along a width direction of the electrode connection part, and a plurality of straight weld regions may be spaced apart from each other in a vertical direction.

### BRIEF DESCRIPTION OF THE DRAWINGS

FIG. 1 is a perspective view of a secondary battery according to an embodiment of the present disclosure.
FIG. 2 is a cross-sectional view taken along the line 2-2 of FIG. 1.
FIG. 3 is an exploded perspective view before a current collector plate and an electrode assembly are coupled to each other in the secondary battery of FIG. 1.
FIGS. 4A and 4B are an exploded perspective view showing before an electrode connection part and a terminal connection part of the current collector plate are coupled to each other, and a perspective view showing after coupling, respectively, in the secondary battery of FIG. 1.
FIG. 5 is a side view illustrating a current collector plate in the secondary battery of FIG. 1.

### DETAILED DESCRIPTION

Herein, a secondary battery according to some embodiments of the present disclosure will be described in further detail with reference to the accompanying drawings.

Some examples of the present invention are provided to more completely explain the present invention to those skilled in the art; however, the following examples may be modified in various other forms. That is, the present invention may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" and/or "comprising" when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and shall not be interpreted in an ideal or overly formal sense, unless they are expressly defined herein.

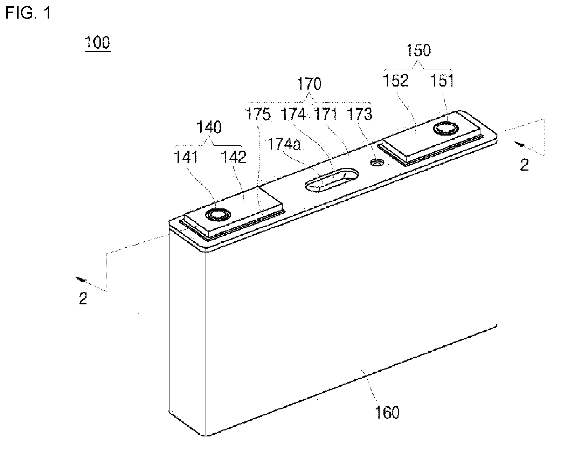

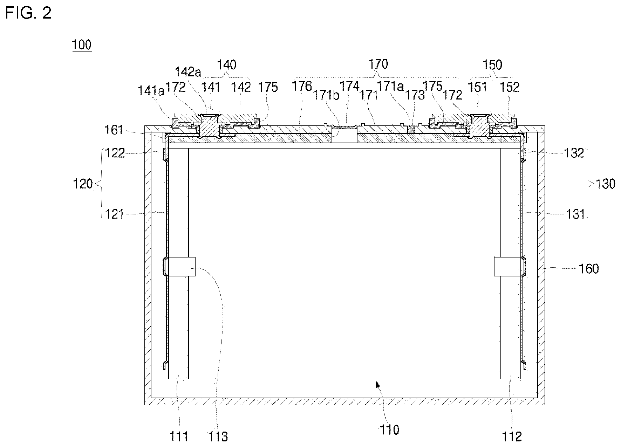

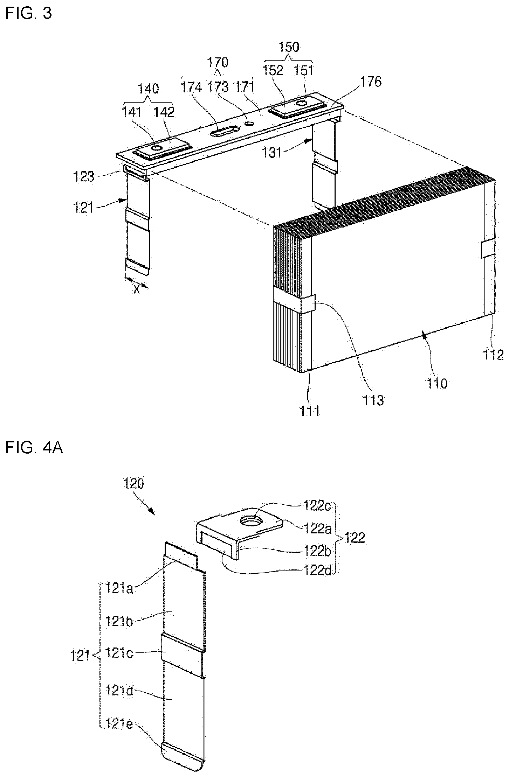

Referring to FIG. 1, a perspective view of a secondary battery according to an embodiment of the present disclosure is shown. Referring to FIG. 2, a cross-sectional view taken along the line 2-2 of FIG. 1 is shown. Referring to FIG. 3, an exploded perspective view before a current collector plate and an electrode assembly are coupled to each other in the secondary battery of FIG. 1 is shown.

As shown in FIGS. 1 to 3, a secondary battery 100 may include an electrode assembly 110, a first current collector plate 120, a second current collector plate 130, a first terminal 140, a second terminal 150, a case 160, and a cap assembly 170. Here, the first terminal 140 may include a first terminal pole 141 and a first terminal plate 142, and the second terminal 150 may include a second terminal pole 151 and a second terminal plate 152.

In an embodiment, the electrode assembly 110 is formed by stacking a plurality of stacks of a first electrode plate, a separator, and a second electrode plate formed in a thin plate shape or a film shape. Here, the first electrode plate may operate as an electrode of a first polarity, for example, a positive electrode, and the second electrode plate may operate as an electrode of a second polarity, for example, a negative electrode. Of course, according to the selection of a person skilled in the art, the first electrode plate and the second electrode plate may be arranged with different polarities from each other.

The first electrode plate is formed by coating a first electrode active material, such as a transition metal oxide, on a first electrode current collector formed of a metal foil, such as aluminum, and includes a first electrode uncoated portion 111 that is a region to which the first electrode active material is not applied. The first electrode uncoated portion 111 provides a passage for current flow between the first electrode plate and the outside.

In an embodiment, the first electrode uncoated portion 111 has a multi-tab structure by being formed to overlap at a same position when the first electrode plates are stacked. The first electrode uncoated portion 111 is formed to protrude toward a side of the electrode assembly 110, and, in one or more embodiments, a plurality of first electrode uncoated portions 111 may be welded to each other to form a first current collecting tab. The first electrode uncoated portion 111 is aligned to a side of the electrode assembly 110 and protrudes, and, in an embodiment, the plurality of first electrode uncoated portions 111 are aligned to a side of the electrode assembly 110 and protrude.

The second electrode plate is formed by coating a second electrode active material, such as graphite or carbon, on a second electrode current collector formed of a metal foil, such as copper or nickel, and includes a second electrode uncoated portion 112 that is a region to which the second electrode active material is not applied.

In an embodiment, the second electrode uncoated portion 112 also has a multi-tab structure by being formed to overlap at a same position when the second electrode plates are stacked. The second electrode uncoated portion 112 is formed to protrude toward the other side of the electrode assembly 110, and, in one or more embodiments, a plurality of second electrode uncoated portions 112 may be welded to each other to form a second current collecting tab.

The separator is positioned between the first electrode plate and the second electrode plate to prevent or substantially prevent a short circuit and to enable movement of lithium ions. The separator may be made of polyethylene, polypropylene, or a composite film of polyethylene and polypropylene. However, a material of the separator is not limited thereto according to embodiments of the present disclosure.

In an embodiment, after the plurality of electrode plates are stacked, the electrode assembly 110 may maintain a stacked state through a separate insulating tape 113 attached to a partial region of the outer surface. Here, the insulating tape 113 maintains a shape of the electrode assembly 110 such that the electrode assembly 110 can be welded to the current collector plates 120 and 130 at a correct position, and even in a final secondary battery structure, the insulating tape 113 can fix the electrode assembly 110 so as to maintain the structure of the electrode assembly 110.

In addition, the electrode assembly 110 is substantially accommodated in the case 160 together with an electrolyte. The electrolyte may include a lithium salt, such as LiPF₆ or LiBF₄ in an organic solvent, such as ethylene carbonate (EC), propylene carbonate (PC), diethyl carbonate (DEC), ethyl methyl carbonate (EMC), or dimethyl carbonate (DMC). In addition, the electrolyte may be in the form of a liquid, a solid, or a gel.

The first current collector plate 120 is made of a conductive material, such as aluminum, and is electrically connected to the first electrode plate by being coupled to the first electrode uncoated portion 111 protruding from an end of the electrode assembly 110. The first current collector plate 120 may be electrically connected to the first electrode uncoated portion 111 by welding. The first current collector plate 120 may include a first electrode connection part 121 extending in a vertical direction along a side of the electrode assembly 110, and a first terminal connection part 122 extending between the electrode assembly 110 and the cap assembly 170, and coupled to the first terminal 140.

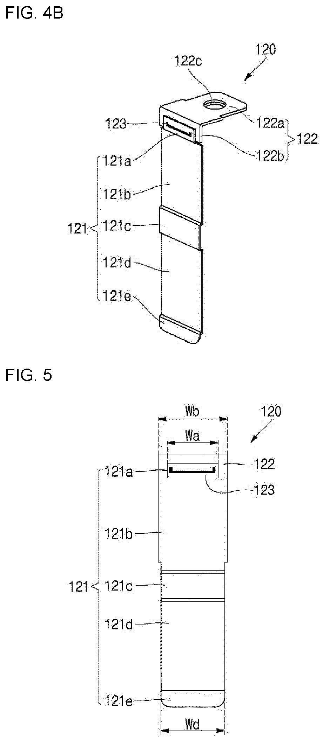

Referring to FIGS. 4A and 4B, respectively, an exploded perspective view showing before the first electrode connection part 121 and the first terminal connection part 122 are coupled in the first current collector plate 120, and a perspective view showing that the first electrode connection part 121 and the first terminal connection part 122 are coupled, are shown. In addition, referring to FIG. 5, a side view of the first current collector plate 120 as viewed from the outside in which the case 160 is positioned is shown. Herein, the configuration of the first current collector plate 120 will be described with reference to FIGS. 4A, 4B, and 5.

The first electrode connection part 121 may extend in the vertical direction along a side surface of the electrode assembly 110 and may have a substantially plate shape. The first electrode connection part 121 may be coupled through welding in a state of being in contact with the first electrode uncoated portion 111 of the electrode assembly 110 to have a same first polarity as the first electrode uncoated portion 111. Herein, for convenience of description, in the first electrode connection part 121, a surface opposite to a side of the electrode assembly 110 is referred to as an inner surface, and a surface opposite to an end surface of the case 160 is referred to as an outer surface.

In an embodiment, the first electrode connection part 121 may include a weld portion 121a, an upper coupling portion 121b, a protrusion 121c, a lower coupling portion 121d, and a bent portion 121e sequentially from the top to the bottom.

The weld portion 121a may be in contact with a side portion 122b of the first terminal connection part 122 to be coupled by welding. The weld portion 121a may be coupled by welding in a state of being inserted in a welding groove 122d provided on an outer surface of the side portion 122b of the first terminal connection part 122. In an embodiment, welding between the weld portion 121a and the side portion 122b of the first terminal connection part 122 may be performed by a laser welding, and a weld region 123 may be formed along a first direction x, which is a width direction of the first electrode connection part 121. In an embodiment, the weld region 123 may extend in a straight line along the first direction x, and may have an end bent in an approximately upward direction. As described above, the weld region 123 may have a bent portion at the end, thereby improving welding strength. In an embodiment, a width Wa of the weld portion 121a may correspond to the size of the welding groove 122d, and, to be welded with the first terminal connection part 122 in a state of being inserted in the welding groove 122d, the width Wa may be smaller than widths of other regions of the first electrode connection part 121. In an embodiment, the width Wa of the weld portion 121a may be smaller than a width Wb of the upper coupling portion 121b.

The upper coupling portion 121b may be a portion extending downward from a lower end of the weld portion 121a. The upper coupling portion 121b may be coupled to the first electrode uncoated portion 111 by welding in a state in which an inner surface of the upper coupling portion 121b is in contact with the first electrode uncoated portion 111. The upper coupling portion 121b may be depressed relative to the weld portion 121a and the protrusion 121c in a direction toward the electrode assembly 110. With this structure, the upper coupling portion 121b can easily come into contact with the first electrode uncoated portion 111, such that welding can be easily performed. In addition, the width Wb of the upper coupling portion 121b may be greater than widths of other regions of the first electrode connection part 121. As described above, in an embodiment, the width Wb of the upper coupling portion 121b is larger the widths of other regions, and a heat dissipation effect against heat generated in the electrode assembly 110 may be improved. In an embodiment, for the upper coupling portion 121b to be welded to the first terminal connection part 122 in a state of the weld portion 121a being inserted into the welding groove 122d, the width Wb of the upper coupling portion 121b may be greater than the width Wa of the weld portion 121a having a smaller width than other regions. In an embodiment, the weld portion 121a may be located at the center of the upper coupling portion 121b. That is, the upper coupling portion 121b may further extend to both sides along the width direction from the lower end of the weld portion 121a.

The protrusion 121c may be a portion extending downward from a lower end of the upper coupling portion 121b. The protrusion 121c may be shaped to protrude, relative to the upper coupling portion 121b and the lower coupling portion 121d, toward an exterior side where the case 160 is positioned. The protrusion 121c may be positioned to correspond to the insulating tape 113 of the electrode assembly 110. Due to a thickness deviation that may be generated by the insulating tape 113 attached to the electrode assembly 110, the protrusion 121c may prevent or substantially prevent the first current collector plate 120 from contacting the first electrode uncoated portion 111. In an embodiment, the protrusion 121c may be located approximately at the center of the first electrode connection part 121. That is, the upper coupling portion 121b and the lower coupling portion 121d may be respectively positioned at upper and lower portions with respect to the protrusion 121c.

The lower coupling portion 121d may be a portion extending downward from a lower end of the protrusion 121c. The lower coupling portion 121d may be coupled to the first electrode uncoated portion 111 by welding in a state in which an inner surface of the lower coupling portion 121d is in contact with the first electrode uncoated portion 111. That is, the first electrode connection part 121 may be electrically connected by welding while the upper coupling portion 121b and the lower coupling portion 121d are in contact with the first electrode uncoated portion 111. In an embodiment, the lower coupling portion 121d and the upper coupling portion 121b may have inner surfaces facing the electrode assembly 110 on a same plane. The lower coupling portion 121d may be depressed relative to the protrusion 121c and the bent portion 121e in a direction toward the electrode assembly 110. With this structure, the upper coupling portion 121b and the lower coupling portion 121d can easily come into contact with the first electrode uncoated portion 111, such that welding can be easily performed. In an embodiment, the lower coupling portion 121d and the upper coupling portion 121b may be welded and coupled to the first electrode uncoated portion 111 on the outer surface of the first electrode connection part 121 by lasers in a state of being in contact with the first electrode uncoated portion 111. In an embodiment, the lower coupling portion 121d and the upper coupling portion 121b may be formed to be straight along a width direction of the first electrode connection part 121. In an embodiment, the welding by lasers may extend in a straight line along the first direction x, and a plurality of straight welding regions may be formed to be spaced apart from each other in the upper and lower directions (i.e., in a vertical direction).

In an embodiment, a width Wd of the lower coupling portion 121d may be smaller than the width Wb of the upper coupling portion 121b. Also, the width Wd of the lower coupling portion 121d may be greater than the width Wa of the weld portion 121a. In addition, the width Wd of the lower coupling portion 121d may be the same as a width of the protrusion 121c and the bent portion 121e.

The bent portion 121e may be a portion extending downward from a lower end of the lower coupling portion 121d. The bent portion 121e may protrude, relative to the lower coupling portion 121d, toward an exterior side where the case 160 is positioned. The bent portion 121e can improve the straight welding efficiency and the welding depth by allowing the first electrode uncoated portion 111 to maintain parallelism with the upper coupling portion 121b and the lower coupling portion 121d.

In the first electrode connection part 121, the upper coupling portion 121b and the lower coupling portion 121d that are inwardly recessed may be positioned in the upper and lower portions with respect to the protrusion 121c. In addition, the weld portion 121a and the bent portion 121e protruding outwardly may be located at an upper end of the upper coupling portion 121b and the lower end of the lower coupling portion 121d, respectively.

The first terminal connection part 122 is formed in an approximately "┌" shape, and may include an upper portion 122a having an approximately plate shape and interposed between the cap assembly 170 and the electrode assembly 110, and the side portion 122b downwardly bent and extending from the upper portion 122a (e.g., an outer end of the upper portion 122a). Here, the side portion 122b may extend in the vertical direction along a side surface of the electrode assembly 110.

In an embodiment, the upper portion 122a may be positioned parallel to a cap plate 171 to be described later. A terminal hole 122c penetrating between an upper surface and a lower surface may be formed in the upper portion 122a. A first terminal pole 141 to be described below may be inserted into the terminal hole 122c to be riveted and/or welded.

The side portion 122b may have the welding groove 122d concave inwardly formed at the lower end of the outer surface. Here, the welding groove 122d may be shaped to correspond to the weld portion 121a of the first electrode connection part 121. In an embodiment, the welding groove 122d may be located at the center of the lower end of the side portion 122b. The side portion 122b may be electrically and mechanically coupled to the first electrode connection part 121 by welding in a state in which the weld portion 121a is inserted into the welding groove 122d. In addition, the lower end of the side portion 122b may be in contact with the upper end of the upper coupling portion 121b extending further to both sides from the lower end of the weld portion 121a in the width direction. The side portion 122b, including the welding groove 122d, may prevent or substantially prevent position misalignment when being coupled to the first electrode connection part 121 and may improve bonding strength.

In an embodiment, the first terminal connection part 122 is coupled to the first electrode connection part 121 by laser welding to be formed into the first current collector plate 120.

The second current collector plate 130 is made of a conductive material, such as nickel, and comes into contact with the second electrode uncoated portion 112 protruding from another end of the electrode assembly 110 to be electrically connected to the second electrode plate. The second current collector plate 130 includes a second electrode connection part 131 and a second terminal connection part 132. In an embodiment, the shape of the second current collector plate 130 is the same as that of the first current collector plate 120, and repeated description will be omitted.

The first terminal 140 is made of a conductive material, such as aluminum, and may be electrically connected to the first current collector plate 120. The first terminal 140 includes the first terminal pole 141 and the first terminal plate 142.

The first terminal pole 141 protrudes and extends upward by a length (e.g., a predetermined length) through the cap plate 171 of the cap assembly 170, and may be electrically connected to the first current collector plate 120 under the cap plate 171. In addition, in one or more embodiments, the first terminal pole 141 protrudes and extends to the upper portion of the cap plate 171 by a length (e.g., a predetermined length), and a flange 141a may be formed on the cap plate 171 such that the first terminal pole 141 does not come off from the cap plate 171. The flange 141a may protrude between the first terminal plate 142 and the cap plate 171. A lower portion of the first terminal pole 141 may be riveted and/or welded after being fitted into the first terminal hole 122c of the first current collector plate 120.

The first terminal plate 142 has a terminal hole 142a, and the upper portion of the first terminal pole 141 may be coupled to the terminal hole 142a to then be riveted and/or welded. The first terminal plate 142 may be positioned on the cap plate 171. In one or more embodiments, interfaces of the first terminal pole 141 exposed upward and the first terminal plate 142 may be welded to each other. For example, a laser beam may be provided to a boundary region between the first terminal pole 141 exposed upward and the first terminal plate 142, and the boundary region may be melted and then cooled and welded. In some examples, the first terminal pole 141 and the first terminal plate 142 may be electrically insulated from the cap plate 171.

The second terminal 150 is made of a conductive material, such as nickel, and is electrically connected to the second current collector plate 130. The second terminal 150 includes the second terminal pole 151 and the second terminal plate 152. In an embodiment, the shape of the second terminal 150 is the same as that of the first terminal 140, and repeated description will be omitted.

The case 160 is made of a conductive metal, such as aluminum, aluminum alloy, or nickel-plated steel, and may have a substantially hexahedral shape with an opening into which the electrode assembly 110, the first current collector plate 120 and the second current collector plate 130 can be inserted and seated. The cap plate 171 may be coupled to the opening of the case 160 to seal the case 160. An inner surface of the case 160 may be insulated to prevent or substantially prevent an electrical short circuit from occurring therein.

The cap assembly 170 may be coupled to the case 160. In an embodiment, the cap assembly 170 may include the cap plate 171, a seal gasket 172, a stopper 173, a safety vent 174, an upper coupling member 175, and a lower insulating member 176. The cap plate 171 may seal an opening 161 of the case 160. The seal gasket 172 is made of an insulating material between the cap plate 171 and the first terminal pole 141 of the first terminal 140, and between the cap plate 171 and the second terminal pole 151 of the second terminal 150, respectively, to seal a portion between each of the first terminal pole 141 and the second terminal pole 151 and the cap plate 171. The seal gasket 172 prevents or substantially prevents external moisture from penetrating into the secondary battery 100 or the electrolyte contained in the secondary battery 100 from leaking to the outside.

A plug 173 seals an electrolyte injection hole 171a of the cap plate 171, and a safety vent 174 may be installed in a vent hole 171b of the cap plate 171 and have a notch 174a installed so as to be opened at a set pressure.

An upper coupling member 175 may be formed between the cap plate 171 and each of the first and second terminal poles 141 and 151 at the upper portion of the cap plate 171. In addition, the upper coupling member 175 is in close contact with the cap plate 171. Further, the upper coupling member 175 may also be close contact with the seal gasket 172. The upper coupling member 175 may insulate the first and second terminal poles 141 and 151 from the cap plate 171. In one or more embodiments, the upper coupling member 175 formed on the first terminal pole 141 may electrically connect the first terminal plate 142 and the cap plate 171 to each other, and, thus, the cap plate 171 may be connected to the first terminal to have the same polarity as the first terminal 140. In this case, the case 160 may also have the same polarity as the cap plate 171, and an electrical short circuit with the electrode assembly 110 may be prevented or substantially prevented by an internal insulation treatment.

As described above, the secondary battery according to one or more embodiments of the present disclosure is capable of improving the welding strength of a current collector plate.

While one or more embodiments have been described herein, the present disclosure is not limited thereto, and it will be understood by a person skilled in the art that various changes in form and details may be made therein without departing from scope of the present disclosure as set forth in the claims.

## Claims

1. A secondary battery (100) comprising:
an electrode assembly (110) comprising an electrode uncoated portion (112) exposed to at least one side;
a current collector plate (120, 130) electrically connected to the electrode uncoated portion of the electrode assembly (110);
a case (160) to accommodate the electrode assembly (110) and the current collector plate (120, 130); and
a cap assembly (170) to seal the case (160),
wherein the current collector plate (120, 130) comprises an upper coupling portion (121b) and a lower coupling portion (121d) coupled to the electrode uncoated portion, and a protrusion (121c) protruding toward the case (160) between the upper coupling portion (121b) and the lower coupling portion (121d), wherein the current collector plate (120, 130) comprises:
an electrode connection part (121, 131) welded to the electrode uncoated portion of the electrode assembly (110) and extending along a side of the electrode assembly (110); and
a terminal connection part (122, 132) comprising an end coupled to an upper end of the electrode connection part, and another end coupled to a terminal protruding through the cap assembly (170), **characterised in that**
a width of the upper coupling portion (121b) is greater than that of other regions of the electrode connection part (121).

2. The secondary battery (100) of claim 1, wherein the electrode connection part is plate-shaped and comprises:
a weld portion (121a) coupled to the terminal connection part by welding;
the upper coupling portion (121b) extending downward from a lower end of the weld portion (121a) and being welded in contact with the electrode uncoated portion;
the protrusion (121c) extending downward from a lower end of the upper coupling portion (121b) and protruding toward the case (160);
the lower coupling portion (121d) extending downward from a lower end of the protrusion (121c), recessed toward the electrode assembly (110), and welded in contact with the electrode uncoated portion; and
a bent portion (121e) extending downward from a lower end of the lower coupling portion (121d) and protruding toward the case (160).

3. The secondary battery (100) of claim 2, wherein the terminal connection part comprises:
an upper portion (122a) between the electrode assembly (110) and the cap assembly (170); and
a side portion (122b) bent from the upper portion (122a), extending downward, and coupled to the electrode connection part by welding.

4. The secondary battery (100) of claim 3, wherein the terminal connection part comprises a welding groove (122d) having a shape corresponding to the weld portion (121a) on an outer surface of the side portion (122b), and the weld portion (121a) is coupled to the side portion (122b) of the terminal connection part by welding in a state of being inserted in the welding groove (122d).

5. The secondary battery (100) of claim 3, wherein, in the electrode connection part, a weld region (123) is formed along a width direction of the electrode connection part by welding the weld portion (121a) in a state of being in contact with the side portion (122b) of the terminal connection part.

6. The secondary battery (100) of claim 5, wherein the weld region (123) has an end bent in an upward direction.

7. The secondary battery (100) of claim 1, wherein the lower coupling portion (121d) and the upper coupling portion (121b) are coupled to each other by laser welding in a state of being in contact with the electrode uncoated portion and are formed in a straight shape along a width direction of the electrode connection part, and a plurality of straight weld regions (123) are spaced apart from each other in a vertical direction.

8. The secondary battery (100) of claim 1, wherein the electrode assembly (110) comprises electrode plates and separators alternately stacked, and an insulating tape (113) attached and fixed to an outer surface thereof, and the protrusion (121c) is positioned to correspond to the insulating tape (113).

9. The secondary battery (100) of claim 1, further comprising a terminal protruding upward through the cap assembly (170) and coupled to the current collector plate (120, 130) at a lower portion of the cap assembly (170).

## Patentansprüche

1. Sekundärbatterie (100) umfassend:
eine elektronische Anordnung (110), umfassend einen unbeschichteten Elektrodenabschnitt (112), der zu mindestens einer Seite freiliegt;
eine Stromkollektorplatte (120, 130), die elektrisch mit dem unbeschichteten Elektrodenabschnitt der Elektrodenanordnung (110) verbunden ist;
ein Gehäuse (160) zum Aufnehmen der Elektrodenanordnung (110) und der Stromkollektorplatte (120, 130); und
eine Abdeckungsanordnung (170) zum Abdichten des Gehäuses (160),
wobei die Stromkollektorplatte (120, 130) einen oberen Verbindungsabschnitt (121b) und einen unteren Verbindungsabschnitt (121d), verbunden mit dem unbeschichteten Abschnitt der Elektrode, umfasst, und ein Vorsprung (121c) zwischen dem oberen Verbindungsabschnitt (121b) und dem unteren Verbindungsabschnitt (121d) in Richtung des Gehäuses (160) vorsteht, wobei die Stromkollektorplatte (120, 130) Folgendes umfasst:
ein Elektrodenverbindungsteil (121, 131), das an den unbeschichteten Abschnitt der Elektrode der Elektrodenanordnung (110) geschweißt ist und sich entlang einer Seite der Elektrodenanordnung (110) erstreckt; und
ein Anschlussverbindungsteil (122, 132), umfassend ein Ende, das mit einem oberen Ende des Elektrodenverbindungsteils verbunden ist, und ein weiteres Ende, das mit einem durch die Abdeckungsanordnung (170) vorstehenden Anschluss verbunden ist, **dadurch gekennzeichnet, dass** eine Breite des oberen Verbindungsabschnitts (121b) größer als jene anderer Bereiche des Elektrodenverbindungsteils (121) ist.

2. Sekundärbatterie (100) nach Anspruch 1, wobei das Elektrodenverbindungsteil plattenförmig ist und Folgendes umfasst:
einen Schweißabschnitt (121a), der mit dem Anschlussverbindungsteil durch Schweißen verbunden ist;
das obere Verbindungsteil (121b), das sich von einem unteren Ende des Schweißabschnitts (121a) nach unten erstreckt und so geschweißt ist, dass es mit dem unbeschichteten Abschnitt der Elektrode in Kontakt ist;
den Vorsprung (121c), der sich von einem unteren Ende des oberen Verbindungsabschnitts (121b) nach unten erstreckt und in Richtung des Gehäuses (160) vorsteht;
das untere Verbindungsteil (121d), das sich von einem unteren Ende des Vorsprungs (121c), ausgenommen in Richtung der Elektrodenanordnung (110), nach unten erstreckt und so geschweißt ist, dass es mit dem unbeschichteten Abschnitt der Elektrode in Kontakt ist; und
einen gebogenen Abschnitt (121e), der sich von einem unteren Ende des unteren Verbindungsabschnitts (121d) nach unten erstreckt und in Richtung des Gehäuses (160) vorsteht.

3. Sekundärbatterie (100) nach Anspruch 2, wobei das Anschlussverbindungsteil Folgendes umfasst:
einen oberen Abschnitt (122a) zwischen der Elektrodenanordnung (110) und der Abdeckungsanordnung (170); und
einen seitlichen Abschnitt (122b), der von dem oberen Abschnitt (122a) - sich nach unten erstreckend - gebogen und mit dem Elektrodenverbindungsteil durch Schweißen verbunden ist.

4. Sekundärbatterie (100) nach Anspruch 3, wobei das Anschlussverbindungsteil eine Schweißnut (122d) mit einer Form umfasst, die dem Schweißabschnitt (121a) auf einer Außenfläche des seitlichen Abschnitts (122b) entspricht, und der Schweißabschnitt (121a) mit dem seitlichen Abschnitt (122b) des Anschlussverbindungsteils durch Schweißen verbunden wird, während es in die Schweißnut (122d) eingesetzt ist.

5. Sekundärbatterie (100) nach Anspruch 3, wobei im Elektrodenverbindungsteil ein Schweißbereich (123) entlang einer Breitenrichtung des Elektrodenverbindungsteils durch Schweißen des Schweißabschnitts (121a) während seines Kontakts mit dem seitlichen Abschnitt (122b) des Anschlussverbindungsteils ausgebildet wird.

6. Sekundärbatterie (100) nach Anspruch 5, wobei der Schweißbereich (123) ein in einer Aufwärtsrichtung gebogenes Ende aufweist.

7. Sekundärbatterie (100) nach Anspruch 1, wobei der untere Verbindungsabschnitt (121d) und der obere Verbindungsabschnitt (121b) während ihres Kontakts mit dem unbeschichteten Elektrodenabschnitt durch Laserschweißen miteinander verbunden werden und in einer geraden Form entlang einer Breitenrichtung des Elektrodenverbindungsteils ausgebildet sind und eine Mehrzahl gerader Schweißbereiche (123) in einer vertikalen Richtung voneinander beabstandet sind.

8. Sekundärbatterie (100) nach Anspruch 1, wobei die Elektrodenanordnung (110) abwechselnd gestapelte Elektrodenplatten und Separatoren umfasst und an einer Außenfläche davon ein Isolierband (113) angebracht und befestigt ist und der Vorsprung (121c) positioniert ist, um dem Isolierband (113) zu entsprechen.

9. Sekundärbatterie (100) nach Anspruch 1, ferner umfassend einen Anschluss, der sich nach oben durch die Abdeckungsanordnung (170) erstreckt und an einem unteren Abschnitt der Abdeckungsanordnung (170) mit der Stromkollektorplatte (120, 130) verbunden ist.

## Revendications

1. Batterie secondaire (100) comportant :
un ensemble électrode (110) comportant une partie (112) non revêtue d'électrode exposée à au moins un côté ;
une plaque collectrice de courant (120, 130) connectée électriquement à la partie non revêtue d'électrode de l'ensemble électrode (110) ;
un boîtier (160) pour loger l'ensemble électrode (110) et la plaque collectrice de courant (120, 130) ; et
un ensemble capuchon (170) pour sceller le boîtier (160),
dans laquelle la plaque collectrice de courant (120, 130) comporte une partie d'accouplement supérieure (121b) et une partie d'accouplement inférieure (121d) accouplée à la partie non revêtue d'électrode, et une saillie (121c) faisant saillie vers le boîtier (160) entre la partie d'accouplement supérieure (121b) et la partie d'accouplement inférieure (121d), dans laquelle la plaque collectrice de courant (120, 130) comporte :
une partie de connexion d'électrode (121, 131) soudée à la partie non revêtue d'électrode de l'ensemble électrode (110) et s'étendant le long d'un côté de l'ensemble électrode (110) ; et
une partie de connexion de borne (122, 132) comportant une extrémité accouplée à une extrémité supérieure de la partie de connexion d'électrode, et une autre extrémité accouplée à une borne faisant saillie à travers l'ensemble capuchon (170), **caractérisée en ce que**
une largeur de la partie d'accouplement supérieure (121b) est supérieure à celle d'autres régions de la partie de connexion d'électrode (121).

2. Batterie secondaire (100) selon la revendication 1, dans laquelle la partie de connexion d'électrode est en forme de plaque et comporte :
une partie soudée (121a) accouplée à la partie de connexion de borne par soudage ;
la partie d'accouplement supérieure (121b) s'étendant vers le bas depuis une extrémité inférieure de la partie soudée (121a) et étant soudée en contact avec la partie non revêtue d'électrode ;
la saillie (121c) s'étendant vers le bas depuis une extrémité inférieure de la partie d'accouplement supérieure (121b) et faisant saillie vers le boîtier (160) ;
la partie d'accouplement inférieure (121d) s'étendant vers le bas depuis une extrémité inférieure de la saillie (121c), en retrait vers l'ensemble électrode (110), et soudée en contact avec la partie non revêtue d'électrode ; et
une partie courbée (121e) s'étendant vers le bas depuis une extrémité inférieure de la partie d'accouplement inférieure (121d) et faisant saillie vers le boîtier (160).

3. Batterie secondaire (100) selon la revendication 2, dans laquelle la partie de connexion de borne comporte :
une partie supérieure (122a) entre l'ensemble électrode (110) et l'ensemble capuchon (170) ; et
une partie latérale (122b) courbée depuis la partie supérieure (122a), s'étendant vers le bas, et accouplée à la partie de connexion d'électrode par soudage.

4. Batterie secondaire (100) selon la revendication 3, dans laquelle la partie de connexion de borne comporte une rainure de soudure (122d) ayant une forme correspondant à la partie de soudure (121a) sur une surface extérieure de la partie latérale (122b), et la partie de soudure (121a) est accouplée à la partie latérale (122b) de la partie de connexion de borne par soudure dans un état d'insertion dans la rainure de soudure (122d).

5. Batterie secondaire (100) selon la revendication 3, dans laquelle, dans la partie de connexion d'électrode, une région de soudure (123) est formée le long d'une direction de largeur de la partie de connexion d'électrode par la soudure de la partie de soudure (121a) dans un état de contact avec la partie latérale (122b) de la partie de connexion de borne.

6. Batterie secondaire (100) selon la revendication 5, dans laquelle la région soudée (123) a une extrémité courbée vers le haut.

7. Batterie secondaire (100) selon la revendication 1, dans laquelle la partie d'accouplement inférieure (121d) et la partie d'accouplement supérieure (121b) sont accouplées l'une à l'autre par soudage laser dans un état de contact avec la partie non revêtue d'électrode et sont formées en forme droite le long d'une direction de largeur de la partie de connexion d'électrode, et une pluralité de régions de soudure droites (123) sont espacées les unes des autres dans une direction verticale.

8. Batterie secondaire (100) selon la revendication 1, dans laquelle l'ensemble électrode (110) comporte des plaques d'électrodes et des séparateurs empilés alternativement, et un ruban isolant (113) attaché et fixé à une surface externe de celui-ci, et la saillie (121c) est positionnée pour correspondre au ruban isolant (113).

9. Batterie secondaire (100) selon la revendication 1, comportant en outre une borne faisant saillie vers le haut à travers l'ensemble capuchon (170) et accouplée à la plaque collectrice de courant (120, 130) au niveau d'une partie inférieure de l'ensemble capuchon (170).
